# EUROPEAN PATENT APPLICATION

(11) **EP 2 402 221 A2**
(43) Date of publication of application: **04.01.2012**
(21) Application number: 11380026.2
(22) Date of filing: 30.03.2011
(51) Int. Cl.: B60R 25/00

(54) **Anti-theft device for vehicles**

(30) Priority: 30.06.2010 ES 201030690
(71) Applicant: Guillén Desarrollos Industriales S.L.U., 46230 Alginet Valencia (ES)
(72) Inventor: Guillén Garulo, José Luis, 46230 Alginet(Valencia) (ES)
(74) Representative: Ungria Lopez, Javier

(57) **Abstract**

Anti-theft device for vehicles, applicable to at least one of the vehicle doors for performing their locking by using a movable element (7) and preventing an unwanted opening; characterized in that it comprises a fluid pipe (1) provided with a connector (2) for the connection to a fluid circuit provided in the vehicle, and said pipe including an element (3) for increasing the fluid pressure, a first fluid on/off element (4), status of which is controlled by a first actuating control (5), and a means (6) for diving the movable element (7); so when the first actuating control (5) is first actuated, it produces the passage of fluid through the first fluid on/off element (4), the displacement of the movable element (7) and the door locking.

## Description

### OBJECT OF THE INVENTION

The present invention, as the title of this specification states, refers to an anti-theft device for vehicles that is applied to at least one of the vehicle doors for performing its locking and preventing an unwanted opening.

The invention is applicable to any type of vehicles.

### BACKGROUND OF THE INVENTION

In the state of the art, the use of anti-theft devices for vehicles for locking the doors and preventing unwanted openings is known.

In the case of trailer vehicles, the problem of preventing the opening of the vehicle doors extends to the trailer itself, for which purpose this includes locks actuated by keys, which do not allow their unlocking by actuating a local or remote control.

The invention allows unlocking the locks taking advantage of the fact that in the traction cabins of trailer vehicles a fluid driving circuit is included, which is used as a means for locking the door or doors included in the vehicle, more specifically in the trailer.

### DESCRIPTION OF THE INVENTION

To achieve the objectives mentioned above, the invention is provided with a fluid pipe that, through a connector, is connected to a fluid circuit provided in the vehicle, such as for example may be the pneumatic or hydraulic circuit included in certain vehicles. In this sense the tractor cabins of trailer vehicles may be mentioned. In said fluid pipe, an element for increasing the fluid pressure is included, as well as a first fluid on/off element, status of which is controlled by a first actuating control for opening/closing the flow of the fluid through the pipe, with the pressure established by the element for increasing the fluid pressure.

Also, in the pipe a means for actuating a movable element has been provided, so when the first actuating control is actuated, allows the passage of fluid through the on/off element, which causes the actuation of the actuation means producing the displacement of the movable element, which locks the door.

In one embodiment of the invention, the device includes a control circuit, supply power of which is via a connector through which the connection with the power circuit of the vehicle is made, the control circuit being connected to a second fluid on/off element sandwiched in the fluid pipe between the first on/off element and the means for actuating the movable element, so that when the first on/off element has been triggered, and the second on/off element is triggered through the control circuit, it allows the passage of fluid to the means for actuating the movable element, and therefore the door locking. That is, in this embodiment for closing the door, both the first and the second on/off element have to be actuated.

The control circuit is connected to an antenna for communicating with a remote control center, so that by using the remote control center, the locking/unlocking of the door is allowed to be performed from the remote center, after actuating the first on/off element, as previously described.

Moreover, the device of the invention is provided with a clutch of the actuation means, so that the unlocking of the door in case of a power failure, is allowed.

The clutch includes a locking element that is controlled by the control circuit, so that this includes means for measuring the operation parameters of the system, means for comparing the measured parameters with ranges of previously established parameters and means for detecting when a measured parameter is outside the previously established range; so that when these detection means verifies that a measured parameter is outside the established ranges, maintains the locking element in position, in which the clutch is locked, so as to prevent the unlocking of the door until the parameter that caused the malfunction is restored within expected ranges.

In the preferred embodiment of the invention the first fluid on/off element consists of a valve, while the first actuating control is determined by a mechanical control that allows opening/closing the valve. Regarding the second on/off element, in the preferred embodiment of the invention, it consists of a solenoid valve opening/closing of which is controlled by the control circuit.

When the fluid circuit is a pneumatic circuit the element for increasing the fluid pressure consists of a boiler, while when it is a hydraulic circuit the element for increasing the fluid pressure is a pump.

In addition, in one embodiment of the invention, it is expected that the device is provided with a second actuating control for introducing a security parameter, which is connected to the control circuit, which stores an operation code, so that when the introduction of the security parameter is performed, and the control circuit detects that this corresponds to the stored operation code, the control circuit performs the activation of the second fluid on/off element, which determines the door unlocking. The second actuating control can be a button, a keyboard or the remote control center itself, so that by using any of thereof the introduction of the security parameter that is sent to the control circuit is performed.

In another embodiment of the invention it is expected that the device is equipped with at least one sensor for detecting the locked/unlocked status of the door, which is connected to the control circuit, wherein the status of the door is detected, and from which the status of the door is sent to the remote center.

Furthermore, the control center is equipped with means for indicating the status of the door, so that from these in which status the door is can be known. The element for indicating the status of the door can be an optical, acoustic element, or both. In the preferred embodiment said indicator element is determined by a display screen connected to the control circuit.

Therefore, based on the description given, is easily understood that the invention allows locking/unlocking the door or doors locally or remotely.

Next, to facilitate a better understanding of this specification and being an integral part thereof, a single figure in which the object of the invention has been represented in an illustrative and not limitative manner is attached.

### BRIEF DESCRIPTION OF THE FIGURE

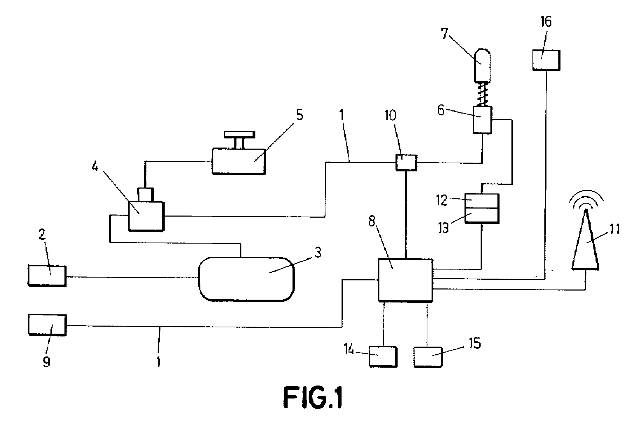

Figure 1. - Shows a schematic representation of a possible embodiment of the device of the invention.

### DESCRIPTION OF THE PREFERRED EMBODIMENT

A description of the invention based on the aforementioned figures is made below.

The device of the invention comprises a fluid pipe 1, which in the embodiment is a pneumatic pipe, which by using a connector 2 and through a boiler 3 is connected to the vehicle pneumatic circuit. In the example, the pipe 1 is provided in a trailer and the pneumatic pipe in the tractor cabin of said trailer.

The output of the valve 4 is connected to a means 6 for actuating a movable element 7, with the actuation means 6 being, according to the preferred embodiment of the invention, constituted by a pneumatic cylinder by which the displacement of the movable element 7, for locking/unlocking the vehicle door is performed. In the example of the figure, a single movable element for locking/unlocking a door provided on the trailer has been represented, but also a plurality of movable elements connected to the corresponding actuation means or pneumatic cylinder, for locking/unlocking a plurality of trailer doors, can be included.

In one embodiment of the invention, the valve 4 is directly connected to the actuation means, through the pipe 1, so that when the mechanical control 5 is triggered the aperture of the valve 4 is caused, wherewith pneumatic pressure is applied to the pneumatic cylinder 6, causing the displacement of the movable element 7, as for example may be a slip, which determines the locking of the door, for example introducing the slip 7 at the door.

For performing the unlocking of the door, the mechanical control 5 is actuated again, causing the closing of the valve 4, which determines not to apply pressure on the pneumatic cylinder 6, and consequently the movable element returns to its original position allowing the door opening.

The invention forecasts sandwiching a solenoid valve 10, in the pipe 1, which is connected to a control circuit 8, supply power of which is via a connector 9, which is a means for connecting the control circuit to the power supply source provided in the vehicle, so that in this case, for locking the door, in addition to actuate the mechanical control 5, it is necessary that the control circuit 8 triggers the solenoid valve 10 through which the passage of fluid to the actuation means is allowed, and consequently the displacement of the movable element 7 performing the door locking.

For unlocking the door, it is sufficient to actuate the solenoid valve 10 or the mechanical control 5, since in either case pressure is not longer applied to the actuation means 6.

The invention forecasts the incorporation of a clutch 12 that is connected to the actuation means 6 for allowing the door unlocking in case of failure of pneumatic or electric power supply, for which purpose the clutch 12 acts on the actuation means disconnecting from the movable element 7.

Furthermore, the clutch 12 is equipped with an element 13 for locking the clutch 12, which is controlled by the control circuit 8, by which locking or unlocking the clutch 12 is allowed, so that until the control circuit 8 does not act on the locking element 13, the clutch 12 remains locked, which prevents the door from unlocking and consequently its opening.

The control circuit 8 receives all the operation parameters of the system and includes means for measuring these parameters, and means for comparing the measured parameters with ranges of parameters previously established by the control circuit 8. Also the control circuit 8 includes means for detecting when a measured parameter is outside the previously established range by the performed comparison, so that when it has been detected that one of the measured parameters is outside the previously established range, the control circuit maintains the locking element 13 in the position wherein the clutch 12 is locked, which prevents performing the opening of the door, unlocking of which can only be performed when the measured parameter value, that has been previously detected and which is outside the established ranges is restored; so that in case of making any kind of attempt to intrusiveness, the variation of one or more of the operation parameters, value of which is beyond the previously established ranges is produced, wherewith the device remains locked in the position in which the movable element 7 locks the door, so that its unlocking can only be made after the damage caused by the intrusion is repaired by qualified personnel, since said repair determines that the abnormal parameter or parameters return again within their previously established ranges.

The control circuit 8 is connected to an antenna 11 for performing the communication with a remote control center (not shown), so that the control of the solenoid valve 10 may be made from the remote center.

Wireless communication performed between the control circuit and the command control center, is performed by any of the known systems such as, for example, may be through the GSM network or any other one.

The device includes one or more sensors 16 for detecting the locked/unlocked status of the door, and these are connected to the control circuit for sending said status to the remote center.

Furthermore, the control circuit 8 is equipped with means for indicating the status of the door, as for example may be using a display screen 15.

The invention forecasts the incorporation of a second actuating control 14 which is connected to the control circuit 8, wherein a security code is stored, for allowing the triggering of the solenoid valve 10 and thereby unlocking and opening the door, when a security parameter is introduced through the second actuating control 14 and this corresponds to the stored parameter. In the embodiment, the second actuating control 14 is determined by a keyboard. At this point it should be noted that the function of the second actuating control can also be performed by the remote center, from which the security parameter is sent to the control circuit 8, so that if it matches the previously stored security parameter, the control circuit 8 triggers the solenoid valve 10.

## Claims

1. Anti-theft device for vehicles, applicable to at least one of the vehicle doors for performing their locking by using a movable element (7) and preventing an unwanted opening; **characterized in that** it comprises a fluid pipe (1) provided with a connector (2) for the connection to a fluid circuit provided in the vehicle, and said pipe including an element (3) for increasing the fluid pressure, a first fluid on/off element (4), status of which is controlled by a first actuating control (5), and a means (6) for diving the movable element (7); so when the first actuating control (5) is actuated, it produces the passage of fluid through the first fluid on/off element (4), the displacement of the movable element (7) and the door locking.

2. Anti-theft device for vehicles, according to claim 1, **characterized in that** it comprises a connector (2) for the connection to a power supply circuit of the vehicle to provide power to a control circuit (8), which is connected to a second fluid on/off element (10), sandwiched in the fluid connection (1) between the first on/off element (4) and the means (6) for driving the movable element (7); the control circuit (8) being connected to an antenna (11) communicating with a remote command center, for performing the locking/unlocking of the door from the remote center, first actuating the first on/off element (4) by means of the first actuating control (5).

3. Anti-theft device for vehicles, according to claim 1, **characterized in that** it comprises a clutch (12) of the driving means (6), for performing the door locking in case of power failure.

4. Anti-theft device for vehicles, according to claim 3, **characterized in that** it comprises an element (13) for locking the clutch (12), which is connected to the control circuit (8), wherein the operating parameters of the system are received, and wherein the means for measuring the operating parameters of the system, means for comparing the measured parameters with previously established ranges of each parameter, means for detecting when a measured parameter is outside the range previously established, so as when performing said detection the locking element (13) is maintained locked in its clutch position (12), are included.

5. Anti-theft device for vehicles, according to claims 1 or 2, **characterized in that** the first on/off (4) is a valve; the first actuating control (5) is a mechanical control and the second on/off element (10) is a solenoid valve.

6. Anti-theft device for vehicles, according to claim 1, **characterized in that** the fluid is selected between a fluid in a pneumatic circuit, in which case the element (3) for increasing the pressure of the fluid is a boiler; and a hydraulic fluid circuit, in which case the element (3) for increasing the pressure of the fluid is a pump.

7. Anti-theft device for vehicles, according to claim 2, **characterized in that** it comprises a second actuating control (14) for introducing a security parameter, which is connected to the control circuit (8) wherein an operation code is stored for triggering the second fluid on/off element (10) and unlocking the door when an introduced security parameter corresponds to the security parameter previously stored in the control circuit (8).

8. Anti-theft device for vehicles, according to claim 7, **characterized in that** the second actuating control (14) is selected from a button, keyboard and the remote control center.

9. Anti-theft device for vehicles, according to claim 2, **characterized in that** it comprises at least one sensor element (16) for detecting locked/unlocked status of the door, which is connected to the control circuit (8) for sending the status of the door to the remote center; and the control circuit (8) being provided with a means (15) for indicating the door status.

10. Anti-theft device for vehicles, according to claim 9, **characterized in that** the element (15) for indicating the door status is selected from an optical, acoustic element and combination of both.

11. Anti-theft device for vehicles, according to claim 10, **characterized in that** the element (15) for indicating the door status is a display screen.
